# EUROPEAN PATENT APPLICATION

(11) **EP 4 141 790 A1**
(43) Date of publication of application: **01.03.2023**
(21) Application number: 21193800.6
(22) Date of filing: 30.08.2021
(51) Int. Cl.: G06T 7/11, G06T 7/00

(54) **METHOD, DEVICE AND SYSTEM FOR AUTOMATED SEGMENTATION OF PROSTATE IN MEDICAL IMAGES FOR TUMOR DETECTION**

(71) Applicant: Siemens Healthcare GmbH, 91052 Erlangen (DE)
(72) Inventor: K.K, Asha, 560100 Bangalore, Karnataka (IN)
(74) Representative: Horn Kleimann Waitzhofer Patentanwälte PartG mbB

(57) **Abstract**

A method (300), device and system (100) for determining one or more biopsy parameters is provided. In one aspect, the method (300) comprises receiving at least one medical image of the patient. Further, the method (300) comprises localizing an organ of interest from the medical image of the abdominal region of the patient using a first trained machine learning model. Further, the method (300) comprises segmenting the localized medical image into at least two zones using a second trained machine learning model, wherein the at least two zones comprise a first zone of the prostate and a second zone of the prostate. The method (200) also comprises providing the segmented medical image with first zone of the prostate and the second zone of the prostate to a user on an output device.

## Description

The present invention relates to a method, device and system for processing medical images. In particular, the invention relates to a method, device and system for automated segmentation of prostate in medical images for tumor detection in a patient.

Prostate cancer (PCa) is the most common type of cancer in male population. Prostate Specific Antigen (PSA) is the most commonly used biochemical marker for prostate cancer. The widespread use of PSA screening has led to earlier detection and a dramatic down-staging of prostate cancer at diagnosis but also has resulted in overdiagnosis and overtreatment of indolent disease. Segmenting the prostate from Magnetic Resonance images plays an important role in prostate cancer diagnosis and to evaluate treatment response. However, the lack of a clear prostate boundary, heterogeneity of prostate tissue, large variety of prostate shapes and scarcity of annotated training data makes automatic segmentation a very challenging task.

Currently, there is no way of accurately segmenting prostate region with a clear prostate boundary which may enable accurate detection of tumor in patients. One of the major known techniques for assessment of patients with suspected prostate cancer is transrectal ultrasound, but it has low sensitivity and specificity rates, especially for transition zone lesions.

Therefore, there is a need for a method and system which enables accurate segmentation of prostate region which enables accurate and timely detection of tumor in the patient. Additionally, there is also a need for a method and a system that is capable of accurately segmenting the medical image to determine prostate region with limited training dataset.

The object of the invention is therefore to provide a method, device and system that enables automated segmentation of prostate in medical images for tumor detection in a patient.

The invention achieves the object by a method automated segmentation of prostate in medical images for tumor detection in a patient. The method comprises receiving by a processing unit, medical images of the patient, wherein the medical images correspond to an abdominal region of the patient. The medical images may be received from a medical imaging device. The medical imaging device may include, for example, but not limited to, magnetic resonance imaging device, computed tomography device, X-ray imaging device, ultrasound imaging device, etc. The medical image data may be two-dimensional and/or related to an imaging plane. Further the medical images may be three-dimensional and/or related to a volume. The imaging plane and/or the volume may be a part of a patient body. The imaging plane and/or the volume may include one or more objects associated with a patient. The objects may be in particular one or more body parts associated with the patient that may have been imaged. The objects may include, but not be limited to, one or more imaged organs, such as the abdominal region of the patient. The medical images may, for example, be in the form of an array of pixels or voxels. Such arrays of pixels or voxels may be representative of intensity, absorption or other parameter as a function of three-dimensional position, and may, for example, be obtained by suitable processing of measurement signals obtained by one or more of the above-mentioned medical imaging devices. In particular, the medical image may include information associated with a region of interest for tumor detection. Alternatively, the medical images may be received from a medical database including a plurality of medical images.

According to an embodiment, the medical image is a magnetic resonance imaging (MRI) image. In particular, the MRI image is a T2-weighted image. Advantageously, T2-weighted images are the most useful tool for diagnosing tumors of transition zone in prostate region.

The method comprises localizing an organ of interest from the medical image of the abdominal region of the patient using a first trained machine learning model. Herein, the organ of interest is the prostate region. The organ of interest may be a region in the medical image which may depict a specific organ in a body of the patient segmentation and tumor detection is to be performed. For example, the organ of interest may be prostate region localized from the abdominal region of the patient.

According to an embodiment, the method of localizing the organ of interest from the medical image of the abdominal region of the patient using the first trained machine learning model comprises inputting the received medical image to an input node of the first trained machine learning model. Further, the method comprises extracting feature maps of the medical image at the input node of the first trained machine learning model. The method comprises encoding the extracted feature map of the medical image at plurality of levels using one or more down sampling layers of the first trained machine learning model to obtain an encoded medical image. The method comprises decoding the encoded medical image at plurality of levels using one or more up sampling layers of the first trained machine learning model to obtain a decoded medical image. The method comprises localizing the prostate region from the abdominal regions based on the decoded medical image. The method comprises outputting the localized medical image on an output node of the first trained machine learning model.

According to an embodiment, the method further comprises processing the localized image using an image processing technique comprises. Herein, the image processing technique comprises determining a region of interest from the localized image obtained from the first trained machine learning model. The region of interest is the largest connected component in the localized image. In particular, the region of interest is the prostate region. Further, the method comprises calculating a three dimensional (3D) bounding box on the determined region of interest. Further, the method comprises constructing a 3D volume medical image based on the calculated three dimensional (3D) bounding box. In an embodiment, the method further comprises resizing the constructed 3D volume image by a predetermined factor to obtain a resized 3D medical image, wherein the resized medical image comprises the localized prostate. Advantageously, converting the 2D image slices to 3D images enables accurate segmentation of two zones in the medical image.

The method comprises segmenting the localized medical image into at least two zones using a second trained machine learning model. The at least two zones comprise a first zone of the prostate and a second zone of the prostate. In particular, the first zone corresponds to a central zone of the prostate and the second zone corresponds to a peripheral zone of the prostate.

In an embodiment, the method of segmenting the localized medical image into at least two zones using the second trained machine learning model comprises inputting the resized 3D medical image to an input node of the second trained machine learning model. Further, the method comprises extracting feature maps of the 3D medical image at the input node of the second trained machine learning model. The method comprises encoding the extracted feature map of the 3D medical image at plurality of levels using one or more down sampling layers of the second trained machine learning model to obtain an encoded 3D medical image. Further, the method comprises decoding the encoded 3D medical image at plurality of levels using one or more up sampling layers of the second trained machine learning model to obtain a decoded 3D medical image. Further, the method comprises masking the decoded 3D medical image with a first filter and a second filter. Further, the method comprises segmenting the decoded 3D medical image into the first zone of the prostate and the second zone of the prostate based on masking with the first filter and the second filter respectively.

Advantageously, the two machine learning models i.e., the first machine learning model and the second machine learning model are cascaded to enable automatic segmentation of prostate in medical images. It will be appreciated that the segmentation is performed in two stages. The first stage performs coarse segmentation using the first machine learning model and the second stage performs fine segmentation using the second machine learning model.

In an embodiment, each of the first machine learning model and the second machine learning model is a deep learning model. The first machine learning model is cascaded to the second machine learning model i.e. an output of the first machine learning model is fed as an input to the second machine learning model The two-stage deep learning models enable accurate segmentation of the central zone and the peripheral zone in the prostate region of the medical images . The deep learning model may have an input layer, a plurality of hidden layers and an output layer. Input and output parameters may be defined and fixed. For example, the input parameters may be the medical image of an anatomical region the patient. The output parameters may include the segmented medical images. Advantageously, the two stage cascaded machine learning models enables accurate segmentation with limited labelled data. Furthermore, the processing time required for such a segmentation is also considerably reduced as less data is to be processed by the deep learning models.

The object of the invention is also achieved by a medical imaging device for automated segmentation of prostate in medical images for tumor detection in a patient. The device comprises one or more processing units, a scanner unit configured to capture one or more medical images and a memory coupled to the one or more processing units. The memory comprises a biopsy module configured to perform the method steps as described above, using the first trained machine learning model and the second trained machine learning model.

The invention relates in another aspect to a system automated segmentation of prostate in medical images for tumor detection in a patient. According to an embodiment, the system comprises one or more one or more servers and a medical imaging device coupled to the one or more servers. The one or more servers comprise instructions, which when executed causes the one or more servers to perform the method steps as described above, using the first trained machine learning model and the second trained machine learning model.

The invention relates in one aspect to a computer program product comprising a computer program, the computer program being loadable into a storage unit of a system, including program code sections to make the system execute the method according to an aspect of the invention when the computer program is executed in the system.

The invention relates in one aspect to a computer-readable medium, on which program code sections of a computer program are saved, the program code sections being loadable into and/or executable in a system to make the system execute the method according to an aspect of the invention when the program code sections are executed in the system.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:
- FIG 1: illustrates a block diagram of a client-server architecture which provides a geometric modeling of components representing different parts of a real-world object, according to an embodiment of the present invention;
- FIG 2: illustrates a block diagram of a data processing system in which an embodiment for segmentation of prostate in medical images for tumor detection can be implemented;
- FIG 3: illustrates a flowchart of a method of automated segmentation of prostate in medical images for tumor detection in a patient, according to an embodiment of the invention;
- FIG 4: illustrates an exemplary flowchart of steps of segmentation of prostate in medical images, according to an embodiment of the invention;
- FIG 5: illustrates a flowchart of a method of localizing the organ of interest from the medical image of the abdominal region of the patient using the first trained machine learning model, according to an embodiment of the invention;
- FIG 6: illustrates a working of the first machine learning model for localizing the organ of interest, according to an embodiment of the invention;
- FIG 7: illustrates a flowchart of a method of processing the localized image using an image processing technique, according to an embodiment of the invention;
- FIG 8: illustrates a flowchart of a method of segmenting the localized medical image into at least two zones using a second trained machine learning model, according to an embodiment of the invention;
- FIG 9: illustrates a working of the second machine learning model for segmenting the localized medical image, according to an embodiment of the invention; and
- FIG 10: illustrates an exemplary graphical user interface displaying different stages of segmentation of prostate for different samples of medical images, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

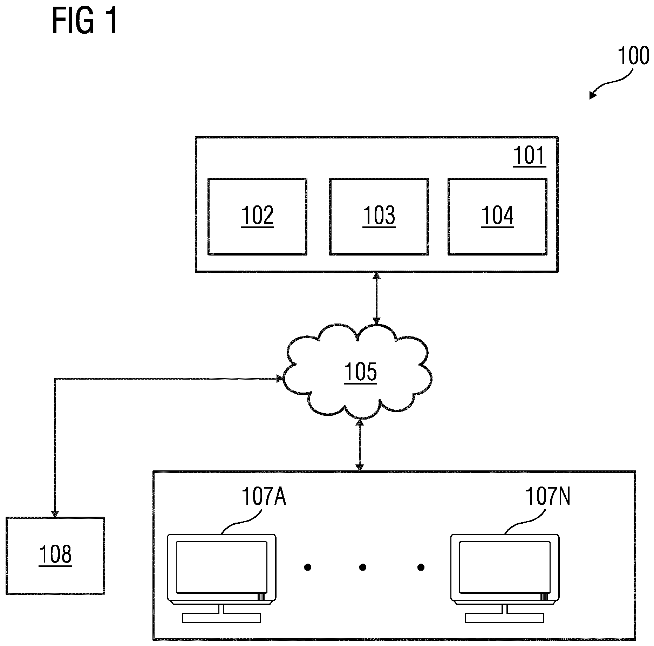

FIG 1 provides an illustration of a block diagram of a client-server architecture that is a geometric modelling of components representing different parts of real-world objects, according to an embodiment. The client-server architecture 100 comprises a server 101 and a plurality of client devices 107A-N. Each of the client device 107A-N is connected to the server 101 via a network 105, for example, local area network (LAN), wide area network (WAN), WiFi, etc. In one embodiment, the server 101 is deployed in a cloud computing environment. As used herein, "cloud computing environment" refers to a processing environment comprising configurable computing physical and logical resources, for example, networks, servers, storage, applications, services, etc., and data distributed over the network 105, for example, the internet. The cloud computing environment provides on-demand network access to a shared pool of the configurable computing physical and logical resources. The server 101 may include a medical database 102 that comprises medical images and associated medical data related to a plurality of patients that is maintained by a healthcare service provider. In an embodiment, the medical database 102 comprises T2-weighted MRI images. The server 101 may include a prostate segmentation module 103 that is configured to perform automatic segmentation of prostate in medical images for tumor detection in a patient. Additionally, the server 101 may include a network interface 104 for communicating with the client device 107A-N via the network 105.

The client device 107A-N are user devices, used by users, for example, medical personnel such as a radiologist, pathologist, physician, etc. In an embodiment, the user device 107A-N may be used by the user to receive medical images associated with the patient. The data can be accessed by the user via a graphical user interface of an end user web application on the user device 107A-N. In another embodiment, a request may be sent to the server 101 to access the medical images associated with the patient via the network 105. An imaging unit 108 may be connected to the server 101 through the network 105. The unit 108 may be a medical imaging unit 108 capable of acquiring a plurality of medical images. The medical imaging unit 108 may be, for example, a scanner unit such as a magnetic resonance imaging unit, computed tomography imaging unit, an X-ray fluoroscopy imaging unit, an ultrasound imaging unit, etc.

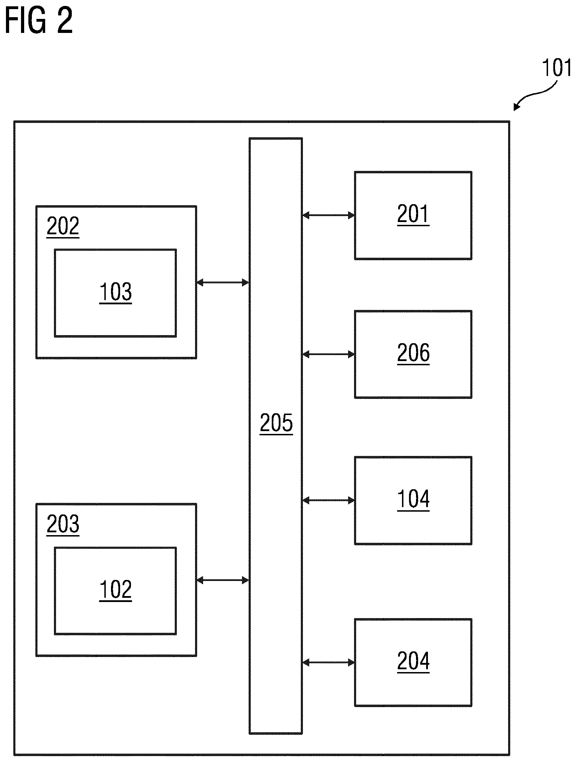

FIG 2 is a block diagram of a data processing system 101 in which an embodiment can be implemented, for example, as a system 101 for segmenting prostate in medical images for tumor detection in a patient, configured to perform the processes as described therein. It is appreciated that the server 101 is an exemplary implementation of the system in FIG 2. In FIG 2, said data processing system 101 comprises a processing unit 201, a memory 202, a storage unit 203, an input unit 204, an output unit 206, a bus 205, and a network interface 104.

The processing unit 201, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 101 may also include embedded controllers, such as generic or programmable logic devices or arrays, application specific integrated circuits, single-chip computers, and the like.

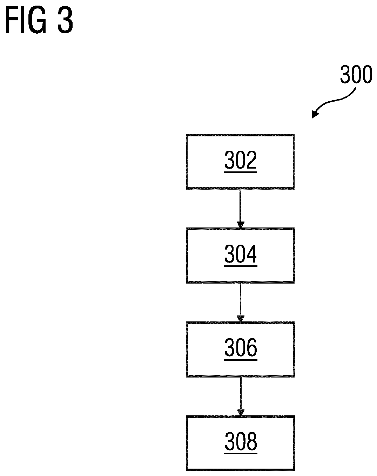

The memory 202 may be volatile memory and non-volatile memory. The memory 202 may be coupled for communication with said processing unit 201. The processing unit 201 may execute instructions and/or code stored in the memory 202. A variety of computer-readable storage media may be stored in and accessed from said memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 201 comprises a prostate segmentation module 103 stored in the form of machine-readable instructions on any of said above-mentioned storage media and may be in communication to and executed by processing unit 201. When executed by the processing unit 201, the prostate segmentation module 103 causes the processing unit 201 to automatically segment the prostate in medical images for tumor detection in patients. Method steps executed by the processing unit 201 to achieve the abovementioned functionality are elaborated upon in detail in FIG 3, 5, 7, and 8.

The storage unit 203 may be a non-transitory storage medium which stores a medical database 102. The medical database 102 is a repository of medical images and associated medical data sets related to one or more patients that is maintained by a healthcare service provider. The input unit 204 may include input means such as keypad, touch-sensitive display, camera (such as a camera receiving gesture-based inputs), etc. capable of receiving input signal such as a medical image. The bus 205 acts as interconnect between the processor 201, the memory 202, the storage unit 203, the input unit 204, the output unit 206 and the network interface 104.

Those of ordinary skilled in the art will appreciate that said hardware depicted in FIG 1 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. Said depicted example is provided for the purpose of explanation only and is not meant to imply architectural limitations with respect to the present disclosure.

A data processing system 101 in accordance with an embodiment of the present disclosure comprises an operating system employing a graphical user interface. Said operating system permits multiple display windows to be presented in the graphical user interface simultaneously with each display window providing an interface to a different application or to a different instance of the same application. A cursor in said graphical user interface may be manipulated by a user through a pointing device. The position of the cursor may be changed and/or an event such as clicking a mouse button, generated to actuate a desired response.

One of various commercial operating systems, such as a version of Microsoft Windows^{™}, a product of Microsoft Corporation located in Redmond, Washington may be employed if suitably modified. Said operating system is modified or created in accordance with the present disclosure as described.

Disclosed embodiments provide systems and methods for processing medical images. In particular, the systems and methods may determine biopsy parameters associated with a patient.

FIG 3 illustrates a flowchart of a method of automated segmentation of prostate in medical images for tumor detection in a patient, according to an embodiment of the invention. At step 302, at least one medical image data associated with the patient is received. The medical image associated with the patient may be received from a medical imaging unit such as an magnetic resonance imaging unit, X-ray imaging unit, computed tomography imaging unit, PET imaging unit, ultrasound imaging unit, etc. Alternatively, the medical image may be received from the medical database 102. The medical image may include one or more objects associated with the patient. The objects may be one or more anatomical regions or body parts associated with the patient. In the present embodiment, the imaged object may include an organ, tissue, bone, etc. which may be suspected to be cancerous. In a particular embodiment, the medical image may correspond to an abdominal region of the patient. According to an embodiment, the medical image is a magnetic resonance imaging (MRI) image. In particular, the MRI image is a T2-weighted image. It will be appreciated that T2-weighted images are the most useful tool for diagnosing tumors of the transition zone. Segmenting prostate and its zones (central and peripheral zones) from T2-weighted images help to diagnose prostate cancer and to analyze the treatment response. It is also essential in prostate radiotherapy which is a well-established curative oncology modality. Advantageously, the use of T2-weighted improves accuracy of prostate segmentation of the two zones as anatomical structures are not clearly visible in functional sequences.

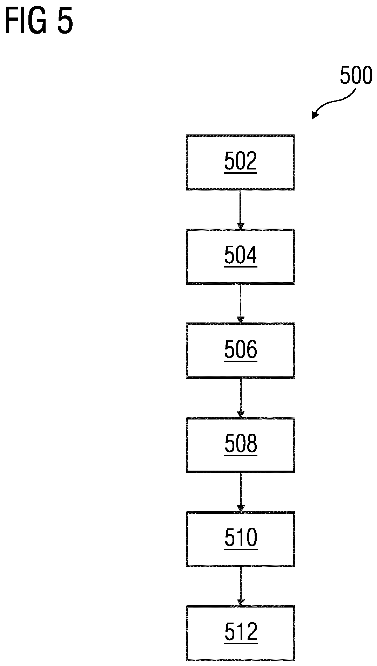

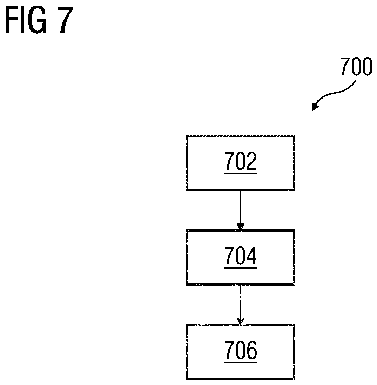

At step 304, an organ of interest is localized from the medical image of the abdominal region of the patient using a first trained machine learning model. Herein the organ of interest is the prostate region. The organ of interest may be a region in the medical image which may depict a specific organ in a body of the patient segmentation and where tumor detection is to be performed. For example, the organ of interest may be a prostate region localized from the abdominal region of the patient. The localization of organ of interest using the first machine learning model ensure that the position of prostate from is accurately determined from the abdominal region image of the patient. According to an embodiment, the medical images received are preprocessed by the processing unit before inputting the same to the first machine learning model. The method of localizing the organ of interest from the medical image of the abdominal region of the patient using the first trained machine learning model is explained in greater detail in FIG. 5. According to an embodiment, the method further comprises processing the localized image using an image processing technique. The localized image is first processed before it is fed into the second machine learning model. The image processing techniques are further explained in greater detail in FIG 7.

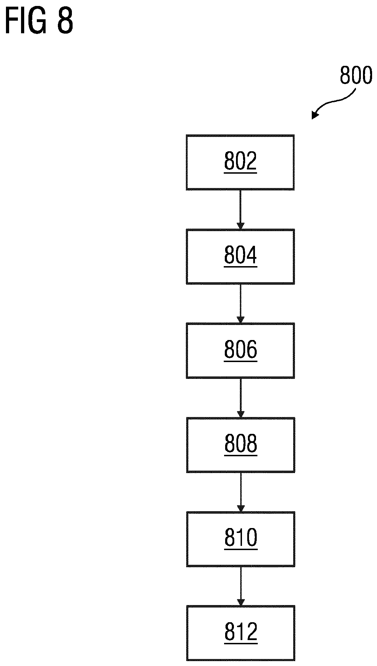

At step 306, the localized medical image is segmented into at least two zones using a second trained machine learning model. Herein the at least two zones comprise a first zone of the prostate and a second zone of the prostate. In particular, the first zone corresponds to a central zone of the prostate and the second zone corresponds to a peripheral zone of the prostate. The second machine learning model is cascaded to the first machine learning model. More specifically, the output of the first machine learning model is input to the second machine learning model for segmentation of the prostate. The method of segmenting the localized medical image into at least two zones using a second trained machine learning model is explained in greater detail in FIG 8.

Notably, the term "machine learning models" as used in first machine learning model and second machine learning model refers to any algorithm that can learn a model or a pattern based on existing information or knowledge, and predict or estimate output using input of new information or knowledge. Herein, the machine learning model infers a prediction model given a set of training data. In general. each individual sample of the training data is a pair containing a dataset (e.g., one or more images or imaging data) and a desired output value or dataset (e.g., segmented images). The machine learning model analyzes the training data and produces a predictor function. The predictor function, once derived through training, is capable of reasonably predicting or estimating the correct output value or dataset. Furthermore, the one or more machine learning models are trained using a large number of training dataset of medical images.

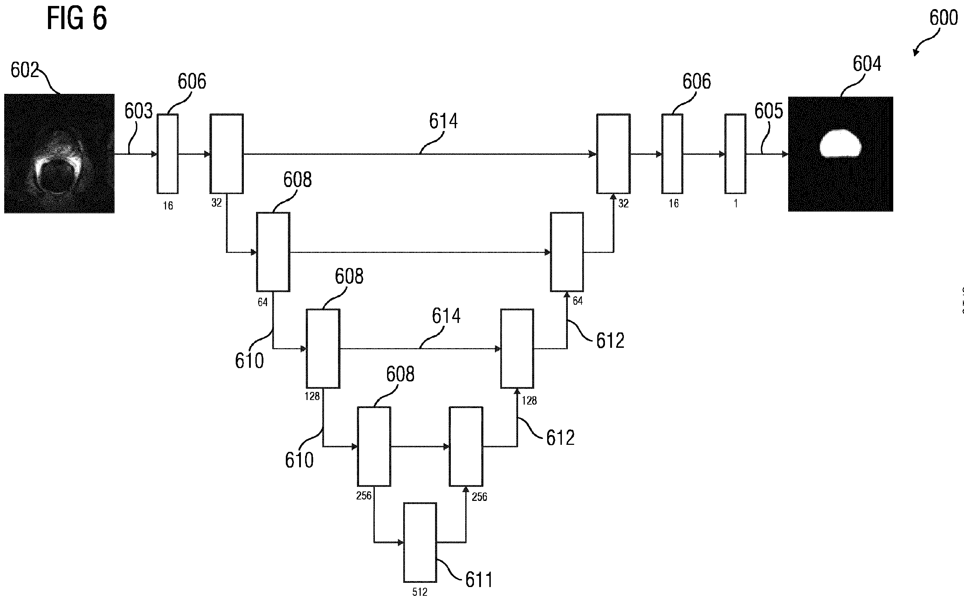

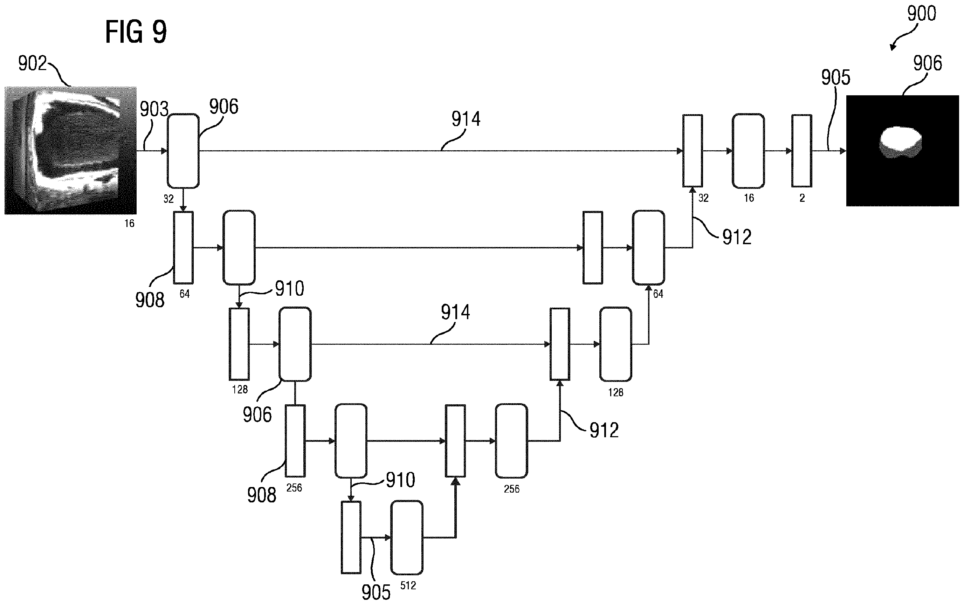

In an example, the invention is based on a convolutional neural network (CNN) for classification of artifacts in the medical image. The CNN comprises one or more convolutional layers, ReLU layers, pooling layers and a fully connected layer. CNNs have an input layer, and output layer, and hidden layers. The hidden layers usually consist of convolutional layers, ReLU layers, pooling layers, and fully connected layers. In particular, the convolutional layers apply a convolution operation to the received medical image and passes the information as clusters of neurons on to next layer of the CNN. The pooling layers combine the outputs of clusters of neurons into a single neuron in the next layer of the CNN. Further, the fully connected layers connect every neuron in one layer to every neuron in the next layer, to create an entire CNN network. The architecture of the first machine learning model and the second machine learning model is illustrated clearly in FIG 6 and FIG 9 respectively.

In accordance with the foregoing embodiments, the trained machine-learning models are generated by training machine learning models based on a training data set. The training data set includes object feature data such as anatomical feature data, and prostate specific data, and behavioral features data such as heuristic data, domain data, best practice data, and context data. For example, the feature data may include type of anatomical feature, prostate feature data (e.g., line, circular, semi-circular for edges), distance between two organs, volume, material, information about neighboring objects (e.g., attributes boundaries and edges of the prostate region), and the like.

In a particular embodiment, the deep learning model is implemented using Keras with a TensorFlow backend on a DGX-1 with 2, 16GB Tesla V1 GPU, batch size = 2, and learning rate = 10-4. Table 1 represents details of the training dataset used to train the machine learning models.

**Table 1**

| Data Set | Institution | Field strength(T) | Resolution (in/plane through)(mm) | Endorectal coil |
|---|---|---|---|---|
| Site A | RUNMC | 3 | 0.6-0.625/3.5-4 | Surface |
| Site B | BMC | 1.5 | 0.4/3 | Endorectal |
| Site C | HCRUDB | 3 | 0.67-0.79/1.25 | No |
| Site D | UCL | 1.5 and 3 | 0.325-0.625/3-3.6 | No |
| Site E | BIDMC | 3 | 0.25/2.2-3 | Endorectal |
| Site F | HK | 1.5 | 0.625/3.6 | Endorectal |

At step 308, the segmented medical image with first zone of the prostate and the second zone of the prostate is provided to a user on an output device. The segmented medical image may be provided on a graphical user interface associated with the output device. The first zone and the second zone are clearly highlighted on the medical image for the analysis of the user such as radiologists, physicians and other health specialists.

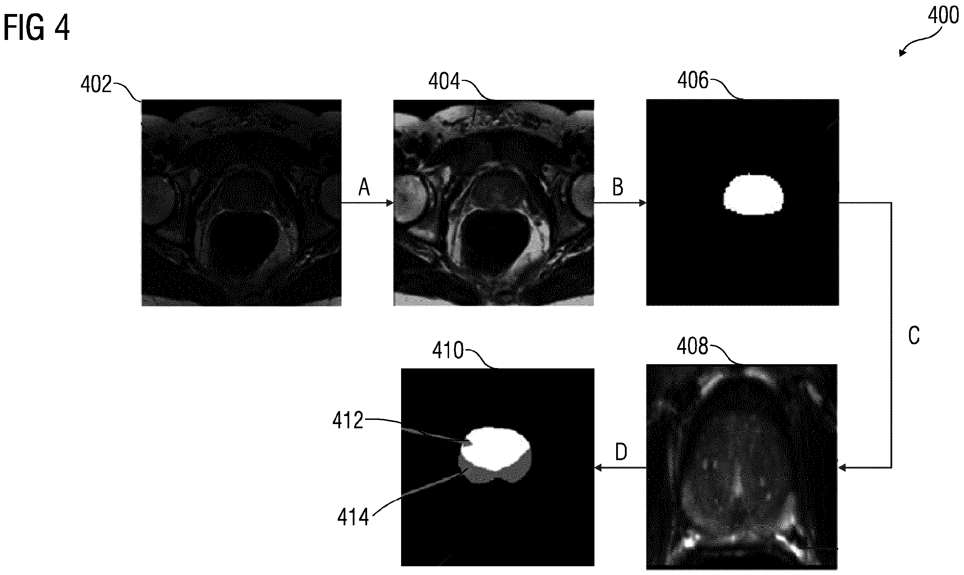

FIG 4 illustrates an exemplary flowchart 400 of steps of segmentation of prostate in medical images, according to an embodiment of the invention. As shown, the medical image 402 is the input image. The input image 402 is a raw image as obtained from the imaging device such an MRI scanner. The input medical image 402 corresponds to the abdominal region of the patient. Furthermore, the received input image 402 is a T2-weighted MRI image. At a first step 'A', the input image 402 is preprocessed to obtain a better quality image 404. The preprocessing includes image augmentation by applying random rotation, translation and zooming. Further, the preprocessing includes z-score normalization to resize the input image slices to 128x128. The preprocessed image 404 is obtained as a result of the preprocessing step 'A'. At a step 'B', the preprocessed image 404 is input to the first machine learning model to perform localization or coarse segmentation of the preprocessed image 404. The course segmentation is performed using encoder and decoder blocks of 2D Unet. The encoder has convolution blocks followed by a maxpool and/or downsampling operation to encode the preprocessed image 404 image into feature representations at multiple levels. The decoder consists of upsampling, and concatenation followed by regular convolution operations. The goal is to semantically project the low-resolution features learnt by the encoder onto the higher resolution image space. As a result of the coarse segmentation, the prostate gland is localized as shown in image 406. At step 'C', the localized medical image 406 is further processed using image processing techniques. The localized image 406 is cropped, resized, and converted into a 3D image 408. At step 'D', the 3D image is input to the second machine learning model to perform accurate segmentation of the localized prostate region. The convolution operation is used with kernel size (7x7) to cover global information. The accurate delineation of the prostate boundary is done by using the combination of U-net with residual connection. Residual connection helps to train the network. Concatenation operation of the standard U-net is replaced with maxout function to reduce the number of trainable parameters. As a result, the output image 410 is obtained with two segmented zone, the central zone 412 of the prostate and the peripheral zone 414 of the prostate.

FIG 5 illustrates a flowchart of a method 500 of localizing the organ of interest from the medical image of the abdominal region of the patient using the first trained machine learning model, according to an embodiment of the invention. The first machine learning model is used to trained based on a series of normalized and augmented medical images. The first machine learning model is trained to determine approximate location of the prostate localizing the prostate area in each input slices of the medical image. At step 502, the received medical image is inputted to an input node of the first trained machine learning model. The first trained machine learning model is designed for localization of the prostate. At step 504, the feature maps of the medical image are extracted at the input node of the first trained machine learning model. At step 506, the extracted feature map of the medical image are encoded at plurality of levels using one or more downsampling layers of the first trained machine learning model to obtain an encoded medical image. The first machine learning model employs an encoder for encoding the medical images. The medical image is passed through the encoder network. The encoder network comprises series of convolution, activation, and maxpooling layers. The encoder mainly converts input image into features at multiple levels. At step 508, the encoded medical image is decoded at plurality of levels using one or more up sampling layers of the first trained machine learning model to obtain a decoded medical image. The first machine learning model employs a decoder for decoding the medical images. The decoder comprises of upsampling and concatenation followed by convolution operations. The objective of the decoder is to semantically project the low-resolution features learnt by the encoder onto the higher resolution image space. At step 510 the prostate region is localized from the abdominal regions based on the decoded medical image. At step 512, the localized medical image is outputted on an output node of the first trained machine learning model.

Fig 6 illustrates a working of the first machine learning model 600 for localizing the organ of interest, according to an embodiment of the invention. As shown, the input image 602 is an input of the first machine learning model 600 and localized image 604 is the output of the first machine learning model 600. Herein, the first machine learning model 600 is a 2D CNN network, wherein a 128x128 image is input for localization of the prostate. The 2D CNN network comprises an encoder network and a decoder network. As shown, the input operation is represented by 603, convolution 3D operation is represented by 606, the convolution 3D operation along with batch normalization and Leaky ReLu (rectified liner unit) activation is represented by 608, maxpooling operation is represented by 610, upsampling operation is represented by 612, and concatenation operation is represented by 614. In an exemplary embodiment, in each layer of the contracting path (encoder network), the height and width of the feature maps are halved and the depth is doubled until reaching the bottleneck i.e., the center of the "U" represented by 611. Conversely, on the expanding path (decoder network), the height and width of the feature maps are doubled and the depth is halved at each layer until reaching the output. Furthermore, each set of feature maps generated on the contracting path are concatenated to the corresponding feature maps on the expanding path. In the proposed architecture output convolution layer has 1 filter for outputting the localized image. In particular, 3x3 kernels are for conv2D operation with filter size of 16. As shown, the numbers below each convolution 2D operation 608 in FIG 6 indicate the number of filters used in the convolution 2D operation 608. Each of the convolution operation is followed by batch normalization and Leaky ReLU (rectified linear unit) activation except final layer, where sigma activation is used to segment prostate from given 2D image. The input to the first machine learning model 600 is an N×M×C 2D image and the output is an N×M×K probability map. In the proposed invention, N = M =128 pixels, C =1 which represents T2w MRI image, and K= 1 which represents binary segmentation mask of prostate.

Fig 7 illustrates a flowchart of a method 700 of processing the localized image using an image processing technique, according to an embodiment of the invention. At step 702, a region of interest s determined from the localized image obtained from the first trained machine learning model. Herein, the region of interest is the largest connected component in the localized image. In particular, the region of interest is the prostate region. At step 704, a three dimensional (3D) bounding box is calculated based on the determined region of interest. In an example, the input medical image is converted back to original dimension and a 3D bounding box is calculated for the segmented region to crop the approximate prostate region. The isolated points are removed by considering a largest connected component after localizing the medical image. At step 706, a 3D volume medical image is constructed based on the calculated three dimensional (3D) bounding box. After cropping the image volume, 30 pixels offset is applied in both direction for X and Y dimension and 2 slices offset is added for Z dimension of the 3D box. According to an embodiment, the method further comprises resizing the constructed 3D volume image by a predetermined factor to obtain a resized 3D medical image. Herein, the resized medical image comprises the localized prostate region. In an example, the volume within the calculated bounding box is resized to 256x256x32 to use as input to the second machine learning model.

FIG 8 illustrates a flowchart of a method 800 of segmenting the localized medical image into at least two zones using a second trained machine learning model, according to an embodiment of the invention. At step 802, the resized 3D medical image is inputted to an input node of the second trained machine learning model. At step 804, feature maps of the 3D medical image are extracted at the input node of the second trained machine learning model. At step 806, the extracted feature maps of the 3D medical image are encoded at plurality of levels using one or more down sampling layers of the second trained machine learning model to obtain an encoded 3D medical image. The second machine learning model employs an encoder network for encoding the 3D medical image. The encoder has residual connection of convolution and activation layers. This helps to build deeper and wider network. The encoder generates feature maps at different scales. The maxpooling operation is used to perform downsampling in the encoder network. At step 808, the encoded 3D medical image is decoded at plurality of levels using one or more upsampling layers of the second trained machine learning model to obtain a decoded 3D medical image. The second machine learning model employs a decoder network for decoding the 3D medical image. The decoder block also has residual connection of convolution and activation layers. Upsampling is used in decoder to increase the image resolution. At step 810, the decoded 3D medical image is masked with a first filter and a second filter. At step 812, the decoded 3D medical image is segmented into the first zone of the prostate and the second zone of the prostate based on masking with the first filter and the second filter respectively.

FIG 9 illustrates a working of the second machine learning model 900 for segmenting the localized medical image, according to an embodiment of the invention. As shown, the input image 902 is a 3D medical image as obtained from the first machine learning model and postprocessing techniques. The 3D medical image 902 is an input of the second machine learning model 900 and segmented image 904 is the output of the second machine learning model 900. Herein, the second machine learning model 900 is a 3D CNN network, wherein a 256x256x32 3D image is input for segmentation of the prostate. The 3D CNN network comprises an encoder network and a decoder network. As shown, the input operation is represented by 903, output operation is represented by 905, batch normalization and Leaky ReLu (rectified liner unit) activation is represented by 908, maxpooling operation is represented by 910, upsampling operation is represented by 912, and concatenation operation is represented by 914. In an exemplary embodiment, the first layer of the second machine learning model 900 includes convolution layer of kernel size 7x7x7 and 32 feature maps, the remaining convolution layer in the original U-net is replaced with Res-Net blocks both in encoder and decoder path. As shown in the figure, the numbers below each of the operation blocks indicate the number of filters used in the machine learning model 900. Advantageously, the Res-Net is introducing a so-called "identity shortcut connection" that skips one or more layers. The stacking layers do not degrade the network performance, because we identity mappings are stacked upon the current network, and the resulting architecture performs accurately. Notably, the Res-Net blocks are added after spatial dropouts, each block of Res-Net performs a convolution- a batch normalization and a ReLU activation to an input, except the last a block, that does not have the activation (ReLU). Advantageously, an accurate delineation of the prostate boundary is obtained by using the combination of U-net with residual connection. The last layer of the decoder has two convolution filters for generating two zones (central zone and peripheral zone) of prostate.

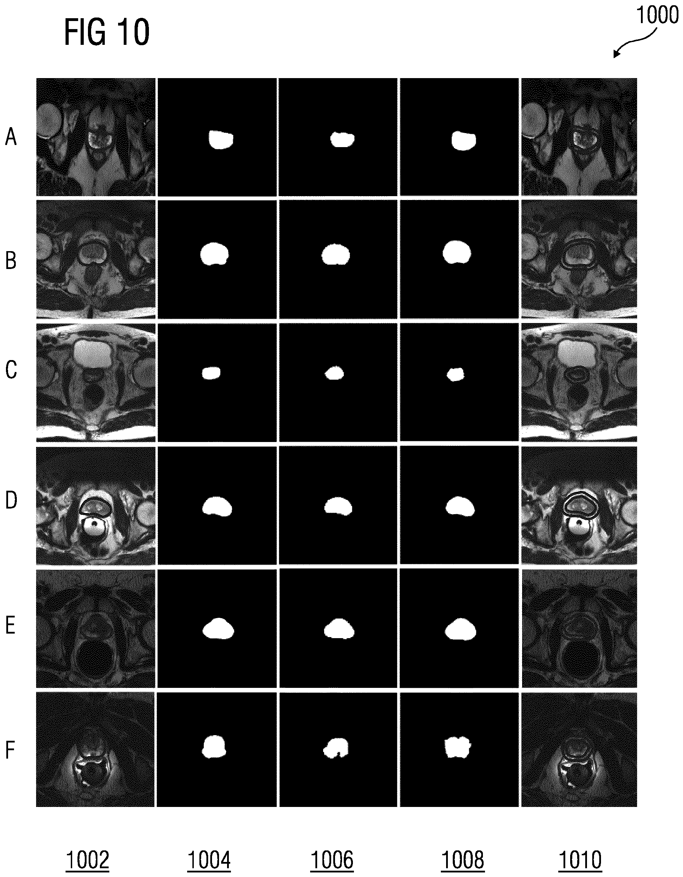

FIG 10 illustrates an exemplary graphical user interface 1000 displaying different stages of segmentation of prostate for different samples of medical images, according to an embodiment of the present invention. FIG 10 is explained in conjunction with Table 1 as illustrated above. For each of the samples of medical images namely, A, B, C, D, E and F, different stages of segmentation of prostate are illustrated. Different columns represent different stages of the segmentation for each of the samples. The column 1002 represent raw medical images for each of the samples. The column 1004 represent ground truth images for each of the samples. The column 1006 represent localized image from the first machine learning model. The column 1008 represent segmented image from the second machine learning model. The column 1010 represent final image representing central zone and the peripheral zone highlighted in the medical image.

The advantage of the invention is that manual effort in detecting tumor in prostate region of a patient is reduced or eliminated completely. Furthermore, two stage neural networks are proposed in the invention to improve accuracy of segmentation. Since the second machine learning model only receives the cropped prostate region as the input volume, the method can delineate the prostate boundary accurately. Additionally, time take for patient treatment is optimized as segmentation of the prostate region is performed faster using two-stage machine learning models.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

## Claims

1. A method for automated segmentation of prostate in medical images for tumor detection in a patient, the method comprising:
receiving, by a processing unit, medical images of the patient, wherein the medical images correspond to an abdominal region of the patient;
localizing an organ of interest from the medical image of the abdominal region of the patient using a first trained machine learning model, wherein the organ of interest is the prostate region;
segmenting the localized medical image into at least two zones using a second trained machine learning model, wherein the at least two zones comprise a first zone of the prostate and a second zone of the prostate, and wherein the first zone corresponds to a central zone of the prostate and the second zone corresponds to a peripheral zone of the prostate; and
providing the segmented medical image with first zone of the prostate and the second zone of the prostate to a user on an output device.

2. The method according to claim 1, wherein localizing the organ of interest from the medical image of the abdominal region of the patient using the first trained machine learning model comprises:
inputting the received medical image to an input node of the first trained machine learning model;
extracting feature maps of the medical image at the input node of the first trained machine learning model;
encoding the extracted feature map of the medical image at plurality of levels using one or more down sampling layers of the first trained machine learning model to obtain an encoded medical image;
decoding the encoded medical image at plurality of levels using one or more up sampling layers of the first trained machine learning model to obtain a decoded medical image;
localizing the prostate region from the abdominal regions based on the decoded medical image; and
outputting the localized medical image on an output node of the first trained machine learning model.

3. The method according to claim 1 and 2, further comprising processing the localized image using an image processing technique comprises, wherein the image processing technique comprises:
determining a region of interest from the localized image obtained from the first trained machine learning model, wherein the region of interest is the largest connected component in the localized image, and wherein the region of interest is the prostate region;
calculating a three dimensional (3D) bounding box on the determined region of interest; and
constructing a 3D volume medical image based on the calculated three dimensional (3D) bounding box.

4. The method according to claim 3, further comprising resizing the constructed 3D volume image by a predetermined factor to obtain a resized 3D medical image, wherein the resized medical image comprises the localized prostate.

5. The method according to any of the preceding claims, wherein segmenting the localized medical image into at least two zones using a second trained machine learning model comprises:
inputting the resized 3D medical image to an input node of the second trained machine learning model;
extracting feature maps of the 3D medical image at the input node of the second trained machine learning model;
encoding the extracted feature map of the 3D medical image at plurality of levels using one or more down sampling layers of the second trained machine learning model to obtain an encoded 3D medical image;
decoding the encoded 3D medical image at plurality of levels using one or more up sampling layers of the second trained machine learning model to obtain a decoded 3D medical image;
masking the decoded 3D medical image with a first filter and a second filter;
segmenting the decoded 3D medical image into the first zone of the prostate and the second zone of the prostate based on masking with the first filter and the second filter respectively.

6. The method according to any of the preceding claims, wherein the medical image is a magnetic resonance imaging (MRI) image, and wherein the MRI image is a T2-weighted image.

7. A medical imaging device for automated segmentation of prostate in medical images for tumor detection in a patient, the device comprising:
one or more processing units;
a scanner unit configured to capture one or more medical images; and
a memory coupled to the one or more processing units, the memory comprising a prostate segmentation module configured to perform the method steps as claimed in any one of claims 1 to 6 using a first trained machine learning model and a second trained machine learning model.

8. A system (100) for automated segmentation of prostate in medical images for tumor detection of a patient, the system (100) comprising:
one or more servers (101);
a medical imaging unit (108) coupled to the one or more servers (101);
the one or more servers (101) comprising instructions, which when executed causes the one or more servers (101) to perform the method steps as claimed in any one of claims 1 to 6 using a first trained machine learning model and a second trained machine learning model.

9. A computer program product comprising machine readable instructions, that when executed by one or more processing units (201), cause the one or more processing units (201) to perform method steps according to claims 1 to 6.

10. A computer readable medium on which program code sections of a computer program are saved, the program code sections being loadable into and/or executable in a system (100) to make the system (100) execute the method steps according to any one of the claims 1 to 6 when the program code sections are executed in the system (100).
